# EUROPEAN PATENT APPLICATION

(11) **EP 2 133 731 A1**
(43) Date of publication of application: **16.12.2009**
(21) Application number: 08171671.4
(22) Date of filing: 15.12.2008
(51) Int. Cl.: G02C 11/02, G02C 7/02, A44C 15/00

(54) **Jewelry article for a lens of eyeglasses and a jewel-installation tool for a pair of eyeglasses**

(30) Priority: 14.05.2008 JP 2008127335
(71) Applicant: Crossfor Co., Ltd., Kouhu-city Yamanashi 400-0862 (JP)
(72) Inventor: Dobashi, Hidetaka, Yamanashi 400-0862 (JP)
(74) Representative: Bergquist, Kjell Gunnar

(57) **Abstract**

It is objected to provide a jewelry article for eyeglasses to prevent losing a jewel by fall, which is held by a magnet on a lens of the pair of eyeglasses. A base and a rear surface magnet are attracting each other by a magnetic force through a lens of eyeglasses, therefore, the base and the rear surface magnet are held on a fixed position on the lens of eyeglasses. The base, that holds the jewel, is fixed to the chain part, which is connected with an eyeglass frame. Thus, even if the main body of a jewel falls from the lens of eyeglasses, the jewel is in a state of being hanged down on the eyeglass frame through the chain part, This prevents losing the jewel.

## Description

### FIELD OF INVENTION

This application claims priority under 35 U.S.C. §119 to Japanese application 2008-127335 filed on May 14, 2008. This document is incorporated in its entirety by reference. The present invention relates to a jewelry article to be mounted to a lens of eyeglasses.

### BACKGROUND OF THE INVENTION

In recent years eyeglasses are requested for not only a function but also high ornamental character. Accordingly, for instance; there is a technology to fix a main body of jewel at any place on a lens by a magnet as stated in the Japanese published patent application 2000-318395, besides various decorations are given on an eyeglass frame.
This technology is that the first magnet is put on a desired position of a rear surface of a lens by a double-faced adhesive tape, and the second magnet, on which an ornamental article is fixed, is held by a magnetic force on a position relative to the first magnet on the lens removable and rotatable.

### OBJECTIVES OF THE INVENTION

### [Disadvantages to be solved by this Invention]

However, the conventional jewelry for eyeglasses mentioned above has a disadvantage, such as that the main body of jewel may be possibly lost, when it hits against something etc, and falls from a lens slipping off the positions of the first and second magnet.

In view of the disadvantage above mentioned, the objective of this invention is to provide a jewelry article for a lens of eyeglasses and a jewel-installation tool for a pair of eyeglasses, which can prevent losing the main body of jewel by the fall, which is held by a magnet on a lens.

### [Means to solve the disadvantages]

To solve the conventional disadvantages mentioned above and achieve the objective mentioned above, a jewelry article for eyeglasses of this invention of the first perspective is a jewelry article to be mounted on a lens of eyeglasses. It comprises a base' held on a front surface of a lens, a main body of a jewel fixed on the base, a part held by a magnetic force generated between the base and the part on a position relative to the base on the front surface of the lens, and a linear article held on the base by its end part and mounted on a eyeglass frame by its another end part detachable.

When using a jewelry article for eyeglasses of this invention of the first perspective, an end part of the linear article is mounted on an eyeglass frame. Besides, a base is set on a desired position on a front surface of a lens of eyeglasses, and a part is held on a relative position attracting to the base on the front surface of the lens. Then, the base and the part are mutually pushed by a magnetic force generated between the base and the part. As a result, the base and the part are held on the lens by friction generated from the magnetic force. Hereupon, an end part of the linear article is fixed to the above mentioned base, and another end part of the linear article is mounted on an eyeglass frame detachable. Therefore, even if the main body of jewel falls from a lens of eyeglasses by hitting any objects, the main body of jewel with the base is in a state of being hanged down on an eyeglass frame by the linear article. As a result, the main body of jewel is not lost.

The base of the jewelry article for eyeglasses of this invention of the first perspective is preferably a doughnut shape and a part of a main body of a jewel is implanted in its midair part.

The linear article of the jewelry article for eyeglasses of this invention of the first perspective is preferably a chain, and an adjustable part that has a hole to pass the chain through is installed along the chain removable, and an end part of the chain is held by a holdback set on the adjustable part.

The length of the linear article of the jewelry article for eyeglasses of this invention of the first perspective is preferably 3 to 12 cm.
The base of the jewelry article for eyeglasses of this invention of the first perspective has preferably a cylindrical shape, and prong settings are installed along the rim of the base; a ring shaped permanent magnet formed inside of a bottom of the base; the main body of the jewel shaped like an approximately triangular pyramid and includes a point positioned in a midair on the permanent magnet; and a bottom surface of an outer circumference of the main body of the jewel is held by the prong settings in the base; and a magnet to keep a fixed distance relation between at least one side of the base and the part is preferably set on a fixed position of the chain, except its both ends, in a state of being mounted on eyeglasses.

The jewelry article for eyeglasses of this invention of the second perspective is the main body of a jewel to be mounted on a lens. It comprises a base to be held on a front surface of a lens of eyeglasses, a main body of a jewel fixed on the base, the first part attached to the base through the first linear article, the second part held by a magnetic force generated between the first and second part on a position relative to the base on the front surface of the lens, and the second linear article to be held on the base by its end part and mounted on a eyeglass frame by its another end part detachable.

The jewel-installation tool for a pair of eyeglasses of this invention of the third perspective is an installation tool for a pair of eyeglasses to mount a main body of a jewel on a lens. It comprises a base to be held on a front surface of a lens of eyeglasses and to be mounted a main body of a jewel, the first part attached to the base through the first linear article, the second part held by a magnetic force generated between the first and second part on a position relative to the base on the front surface of the lens, and the second linear article to be held on the base by its end part and mounted on a eyeglass frame by its another end part detachable.

### [Effect of this invention]

This present invention can provide a jewelry article for a lens of eyeglasses and a jewel-installation tool of a pair of eyeglasses to prevent losing the main body of a jewel held by a magnet on a lens by a fall.

### BRIEF DESCRIPTION OF THE DRAWINGS

FIG.1 is an external figure of the back side of the jewelry article 1 relates to an embodiment of this invention.
FIG.2A illustrates an external figure of a front view that a jewel is fixed on the base of the jewelry article 1 of eyeglasses shown in the FIG.1. FIG.2B is a side lateral view of the base shown in the FIG.1, and FIG.2C is a cross sectional view of the base shown in the FIG.1.
FIG.3 illustrates a cross sectional structure in a state of that the jewelry article of eyeglasses shown in the FIG. is mounted on the eyeglasses.
FIG.4 is a figure to explain a state of that the jewelry article of eyeglasses shown in the FIG.1 is mounted on eyeglasses.
FIG.5 illustrates a state of that a main body of a jewel 30 has fallen off from the state illustrated in the FIG.4.
FIG.6 illustrates a cross sectional figure to explain a jewelry article of the second embodiment of the invention.
FIG.7 is a figure to explain a jewelry article of the third embodiment of the invention.
FIG.8 illustrates a side lateral view of a jewelry article of the forth embodiment of the invention.
FIG.9 is a figure to explain other mean to mount the chain part on an eyeglass frame.

### DETAILED DESCRIPTION OF THE INVENTION

### [The preferred embodiment of this invention]

The jewelry article related to the embodiment of this invention will be better understood from referring the following drawings.

### <The first embodiment of this invention>

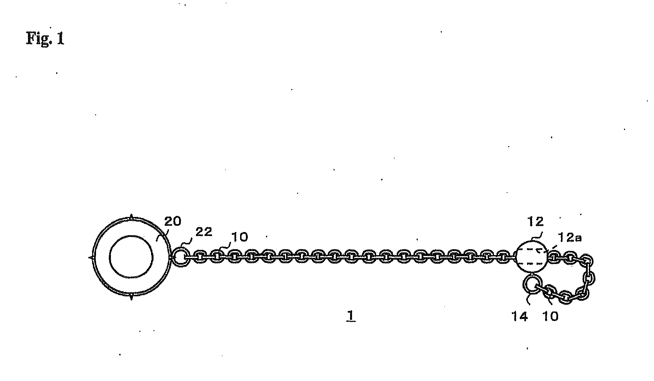

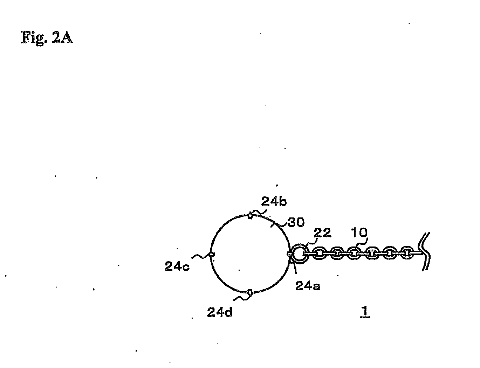

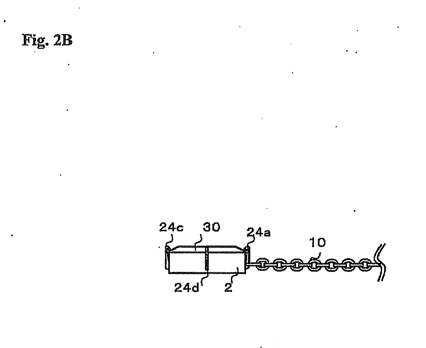

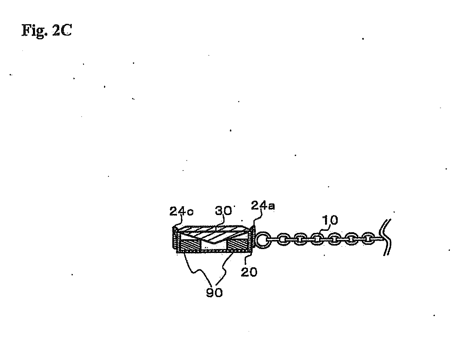

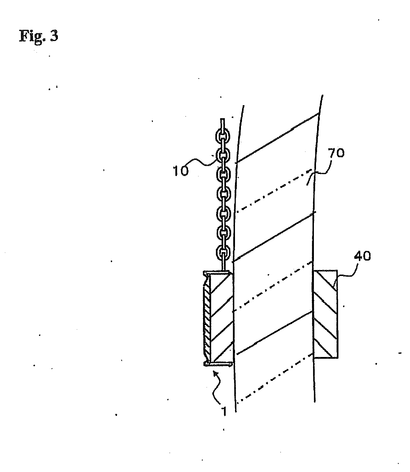

FIG.1 illustrates an external figure of the back side of the jewelry article 1 relates to an embodiment of this invention. FIG.2A illustrates an external figure of a front view showing a state of that a main body of a jewel 30 is fixed on the base 20 of the jewelry article 1 illustrated in FIG.1. FIG.2B illustrates a side lateral view showing the state mentioned above. FIG.2C illustrates a cross sectional structure showing the state mentioned above. FIG.3 illustrates a cross sectional structure in a state of that the jewelry article 1 illustrated in the FIG.1 is mounted on a lens 70 of a pair of eyeglasses.

As illustrated in FIG.1, FIGS.2A, 2B and 2C, the jewelry article 1 for eyeglasses comprises for example; a chain part 10, a base 20, a main body of a jewel 30, and a rear surface magnet 40 as shown in FIG.3.
Hereupon the chain part 10 and the base 20 are compounded of, for example; gold (Au), silver (Ag), platinum (Pt) or other metals etc.

Hereupon, the base 20 is an example for a base of this invention, the main body of a jewel 30 is an example for a main body of a jewel of this invention, the rear surface magnet 40 is an example for a part of this invention and the chain part 10 is an example for a linear article of this invention.

The jewelry article 1 for eyeglasses has the base 20 compounded of a permanent magnet on a front surface of the lens of eyeglasses and the rear surface magnet 40 on a rear surface of the lens confronting with the base 20. Therefore, the lens is tucked by the magnetic force generated between the base 20 and the rear surface magnet 40, and the main body of a jewel 30 can be put on a desired position on a front surface of the lens. By the jewelry article 1 for eyeglasses, an end part of a chain part 10 is connected to the base 20, and another end part of the chain part 10 is mounted on an eyeglass frame. Therefore, even if the main body of a jewel 30 falls by some impacts, the jewelry article 1 for eyeglasses can prevent losing the expensive jewel 30, since the jewel 30 is hanged down on an eyeglass frame by the chain part 10.

Each component of the jewelry article 1 for eyeglasses is explained in detail as followings. As illustrated in FIG.1 and FIGS. 2A, 2B and 2C, an end part of the chain part 10 is held by a ring shaped holdback 22 formed on the outer surface of the base 20, and another end of the chain part 10 is held by a ring shaped holdback 14 set on the spherical ball 20. The chain part 10 is, for example, formed of metal or synthetic resins etc.
The length of the chain part 10 is, for example, approximately 3 to 12 cm, preferably approximately 6 cm.
The length of the chain part 10 is determined according as the position of the jewel 30 on a lens of eyeglasses and the length of the chain part 10 to be hanged down from an eyeglass frame.

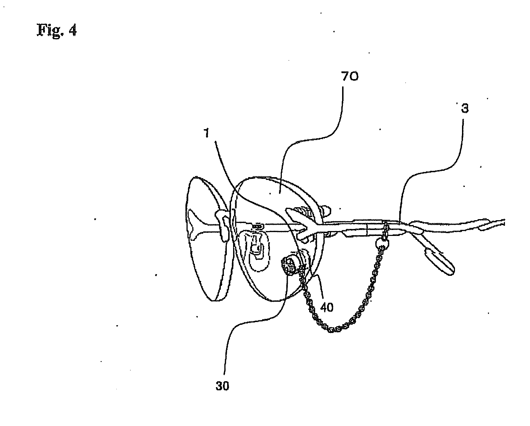

The ball 12 comprises a penetration hole 12a, which passes a central point of the ball, and the chain part 10 passes through the penetration hole 12a removable.
The ball 12 is used to adjust the size of a loop formed partially of the chain part 10 located between the holdback 14 and the hole 12a of the ball 12. This loop is mounted on an eyeglass frame.
When the ball 12 is moved by fingers etc. to the base 20 along the chain part 10 closer, the mentioned above loop becomes bigger, and when the ball 12 is moved to the holdback 14 closer, the loop becomes smaller.
A user puts an eyeglass frame through the loop, while the user makes the loop big moving the ball 12 along the chain part 10. Then, the user makes the loop small on a fixed position of a lens of the eyeglass frame 3, as illustrated FIG.4. This can prevent unfastening of the chain part 10 from the eyeglass frame 3 readily.

As illustrated in FIG.1, the base 20 of the jewelry article 1 has a holdback 22 held on a fixed position of the outer surface of the base 20.
As illustrated in FIG. 2A, 4 prong settings 24a, 24b, 24c, and 24d are installed at a regular space along the outer circumference of the base 20 to hold the main body of the jewel 30 that is a diamond.
The holdback 22 is set on the outer circumference of the prong setting 24a. The thickness of the base 20 is, for example, 1 mm.

Moreover, a ring shaped permanent magnet 90 is held in the bottom of the base 20.
A diamond is cut usually approximately conic; therefore, its apex should be mounted in midair of the permanent magnet 90 in the base 20 as shown in the FIGS.2A, 2B, and 2C. As a result, the entire thickness of the base 20 and the main body of a jewel 30 can be thin, and its design can be superior.
It is still illustrated that a diamond as the main body of a jewel 30 is hold by 4 prong settings 24a, 24b, 24c, and 24d in this embodiment, more or less than 4 prong settings may be formed. Alternatively, the main body of a jewel 30 may be another material besides a diamond. The structure to hold the main body of a jewel 30 on the base 20 is properly selected according to every variety of the main body of a jewel 30.

A permanent magnet is set in the inside of the base 20. Alternatively the base 20 itself may be formed by a permanent magnet.

The rear surface magnet 40 is a permanent magnet and for example, a disk shape having a same outside diameter as the base 20.

It is explained a manner how to place a jewelry article 1 for eyeglasses to an eyeglass frame 3 as followings.
As mentioned above, a user puts an eyeglass frame through the mentioned above loop, while the user makes the loop big moving the ball 12 along the chain part 10. Then, the user makes the loop small on a fixed position near the lens of the eyeglass frame 3, as illustrated FIG.4. As a result, an end part of the chain part 10 is set on an eyeglass frame 3.

As shown in the FIG.3 and FIG.4, the user places the base 20 on a desired position on a front surface of the lens 70 of eyeglasses so that the main body of a jewel 30 is located on the front side. Then, keeping the state above mentioned, the user positions the rear surface magnet 40 relatively to the base 20 on the front surface of the lens 70 of eyeglasses, whereby a magnetic force functions in a direction of attracting each other between the rear surface magnet 40 and the base 20. Concretely, when a side of the base 20 met a front surface of a lens is the south pole of a magnet, a side of the north pole of the rear surface magnet 40 is met a rear surface of the lens. On the other hand, when a side of the base 20 met a front surface of a lens is the north pole of a magnet, a side of the south pole of the rear surface magnet 40 is met a rear surface of the lens.

As a result, the base 20 and the rear surface magnet 40 are attracting each other by a magnetic force through the lens 70 of eyeglasses, and sufficient friction to keep the position of the base 20 and the rear surface magnet 40 against gravity respectively is generated between the base 20 and the front surface of a lens, and the rear surface magnet 40 and the rear surface of the lens.

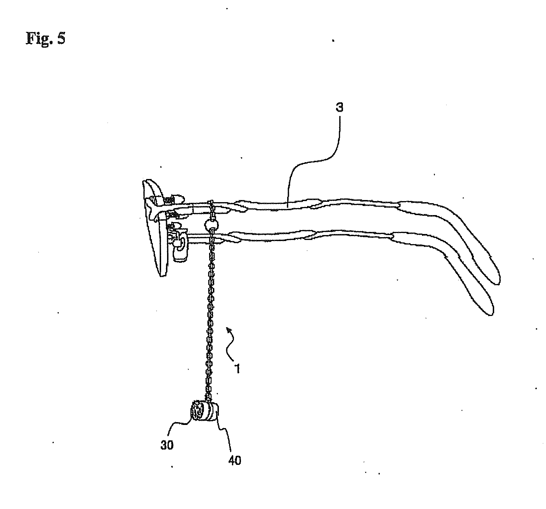

By the mentioned above jewelry article 1 for eyeglasses being mounted on a lens 70 of the pair of eyeglasses, the jewel 30 is not lost by falling from an eyeglass frame 3, in the event of that the jewel 30 falls from a lens 70 by hitting something. Since the base 20 holding the jewel 30 is connected to the chain part 10, and it results into a state that the jewel 30 is hanging down on the eyeglass frame, as shown in FIG.5.

Moreover, the jewelry article 1 comprises design character as shown in FIG.1 etc. As a result, it can provide a superior design unifying the jewel 30.

### <The second embodiment of this invention>

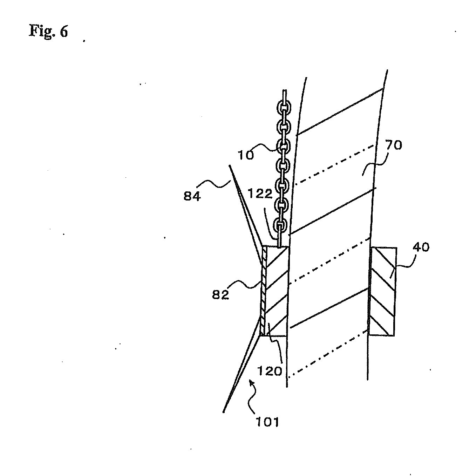

It was illustrated a case in the first embodiment mentioned above that the jewel 30, which was a diamond, was fixed in the base 20 shaped like a doughnut. In this embodiment, it is illustrated a case that another ornamental device except a diamond is fixed on the base. FIG.6 is a cross sectional figure to explain a jewelry article 101 for eyeglasses of the second embodiment of this invention. As illustrated in FIG.6, the jewelry article 101 for eyeglasses uses a disk shaped magnet for the base 120.
A holdback 122 is set on a fixed position of the outer side of the base 120. The holdback 122 is connected to an end part of the chain part 10 mounted on the eyeglass frame 3 as same as the first embodiment.

A double-faced adhesive sheet 82 is pasted on a surface of the base 120, and an object 84 composing a jewel is pasted on the opposite surface to the base 120 of the double-faced adhesive sheet 82.

By the jewelry article 101, the jewel 30 is held on a lens 70 of eyeglasses by a magnetic force between the base 120 and the rear surface magnet 40, as same as the jewelry article for eyeglasses of the first embodiment.

### <The third embodiment of this invention>

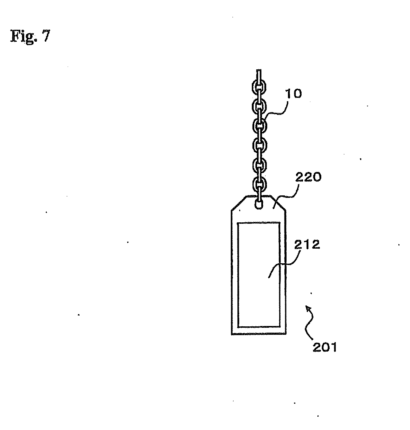

FIG.7 is a figure to explain a jewelry article 201 of the third embodiment of this invention.
In the mentioned above embodiments, a permanent magnet is used for the base 20 and 120. Yet, other metal besides a permanent magnet or resin is used as a material of the base 220.
A permanent magnet 212 is mounted in the inside of the base 220. A jewel is fixed on a surface of the base 220, as same as the first and second embodiments.

### <The forth embodiment of the invention>

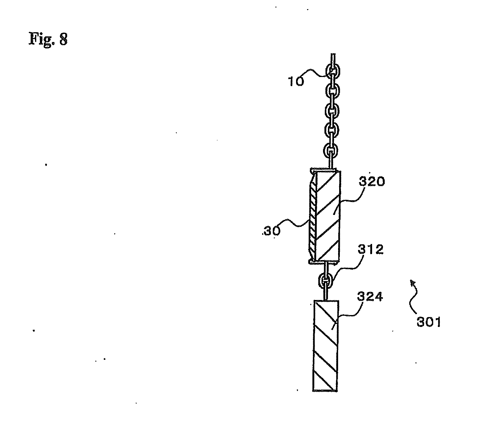

FIG.8 is a cross sectional figure to explain a jewelry article 301 for eyeglasses of the forth embodiment of this invention.
In the above mentioned embodiment, it was illustrated a case that the invention was practiced by one module of a function of the base and a function of the magnet to be set on a rear surface. In this embodiment the invention is practiced by different modules of these functions.

As illustrated in FIG.8, the jewelry article 301 holds a jewel 30 on the disk shaped base 320. The base 320 is not a permanent magnet, but is compounded of a metal or a resin etc.
The base 320 is connected to a permanent magnet 324 through the chain 312.

The jewelry article 301 of eyeglasses can hold the jewel 30 on a relative position of the front side of a lens 70, whereby a permanent magnet 324 and a rear surface magnet 40 attract each other by a magnetic force.

This invention is not limited in the embodiment mentioned above.
Namely, regarding the component in the embodiment mentioned above, a person skilled in the art can do various changes, combination, sub-combination, and substitution in the technical or equivalent of this invention.

In the embodiment mentioned above, it was illustrated that the rear surface magnet 40 could be set on any position of the rear surface of the lens 70 of the eyeglasses 3. Yet, the rear surface magnet 40 may be set by a double-faced adhesive tape etc on a fixed position of the rear surface of the lens 70.

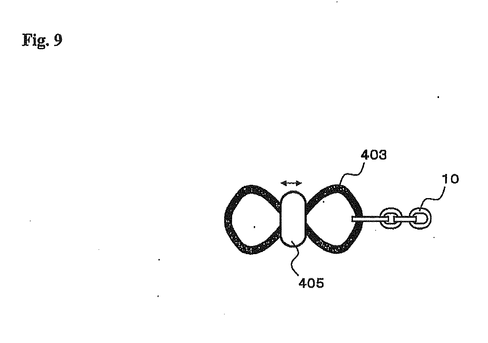

In addition, in the embodiment mentioned above, it was illustrated the ball 12 illustrated in FIG.1 as a mean to mount a chain part 10 on an eyeglass frame of the pair of eyeglasses. Besides this technology, the structure as shown in FIG.9 may be acceptable that an adjustable part shaped like a doughnut 405 is passed through a ring-silicon 403. According to the structure in the FIG.9, a user moves the position of an adjustable part 405 in the direction of the arrow in the FIG.9 to set a size of a loop formed by the silicon part 403 and the adjustable part 405.
Moreover, the chain part 10 and an eyeglass frame of the pair of eyeglasses 3 may be connected by a way of fit of ruggedness.

Further, in the embodiment mentioned above, ornamental character was not given to the rear surface magnet 40 for a lens, yet ornamental character may be given to it.
Further more, more than one set formed of a base 20 and a rear surface magnet 40 may be used.

Still, it was illustrated a case in the embodiment mentioned above that a base 20 is shaped like a doughnut, yet a shape of the base 20 may be other besides the doughnut shape.

Also, in the embodiment mentioned above, the jewel 30 may be fixed rotatable on the base 20 as given in the Japanese published patent application mentioned above.

Besides, it was illustrated in the embodiment mentioned above that a permanent magnet was used as the base 20 and the rear surface magnet 40 mutually, however, either one may be a permanent magnet and another one a ferromagnetic force.

Moreover, a magnet to form a fixed distance relation at least for one side of the base and the part may be set on a fixed position of the chain part 10 mentioned above, except its both ends, being mounted on eyeglasses. This can keep high design character of the chain part 10 having eyeglasses.

### INDUSTRIAL USE POSSIBILITY

This invention is applicable for placing jewelry on a lens of eyeglasses.

## Claims

1. A jewelry article for mounting on a lens of eyeglasses, comprising:
a base held on a front surface of the lens;
a main body of a jewel fixed on the base;
a part held by a magnetic force generated between the base and the part at a position relative to the base, the part positioned on a rear surface of the lens; and
a detachable linear article that is held on the base by an end of the linear article and joined to an eyeglass frame by another end of the linear article.

2. The jewelry article as set forth in claim 1,
wherein the base has a doughnut shape and includes a part of the main body of a jewel implanted in midair of the base.

3. The jewelry article as set forth in claim 1,
wherein the linear article is a chain, and an adjustable part that has a penetration hole to pass the chain through is installed along the chain removable, and an end part of the chain is held by a holdback set on the adjustable part.

4. The jewelry article as set forth in claim 1,
wherein the base has a cylindrical shape including a rim and an orifice, and prong settings are installed along the rim of the base; a ring shaped permanent magnet formed inside of a bottom side of the base;
the main body of the jewel shaped like an approximately triangular pyramid is and includes a point positioned in a midair part on the permanent magnet; and
a bottom surface of an outer circumference of the main body of
the jewel is held by the prong settings in the base.

5. The jewelry article as set forth in claim 1,
wherein a magnet to form a fixed distance relation at least for one side of the base and the part is set on a fixed position of the chain, except its both ends, being mounted on eyeglasses.

6. The jewelry article as set forth in claim 1,
wherein the length of the linear article is 3 to 12 cm.

7. A jewelry article is a main body of a jewel, which is to be mounted on a lens of eyeglasses, comprising:
a base held on a front surface of the lens;
a main body of a jewel fixed on the base;
a first part connected to the base through a first linear article;
a second part to be held by a magnetic force generated between the first part and the second part at a position relative to the base on the front surface of the lens; and
the second linear article to be held on the base by its end part and
mounted on a frame of eyeglasses by its another end part detachable.

8. A jewel-installation tool for mounting jewelry on a lens of eyeglasses, comprising:
a base to be positioned on a front surface of the lens and to fix the main body of a jewel;
a part held by a magnetic force generated between the part and the base at a position relative to the base, on the part positioned on a rear surface of the lens; and
a linear article held on the base by its end part and mounted on a eyeglass frame by its another end part detachable.
